(19) Europäisches Patentamt
European Patent Office
Office européen des brevets

(11) **EP 1 253 435 B1**

(12) **FASCICULE DE BREVET EUROPEEN**

(45) Date de publication et mention de la délivrance du brevet:
**02.12.2009 Bulletin 2009/49**

(51) Int Cl.:
***G01S 3/74*** *(2006.01)*

(21) Numéro de dépôt: **02291003.8**

(22) Date de dépôt: **19.04.2002**

(54) **Procédé et dispositif d'estimation spatio-temporelle d'un ou de plusieurs émetteurs**

Verfahren und Vorrichtung zur Raum-Zeitschätzung von einem oder mehrerer Sendern

Method and system for spatio-temporal estimation of one or several emitters

(84) Etats contractants désignés:
**AT BE CH CY DE DK ES FI FR GB GR IE IT LI LU MC NL PT SE TR**

(30) Priorité: **27.04.2001 FR 0105731**

(43) Date de publication de la demande:
**30.10.2002 Bulletin 2002/44**

(73) Titulaire: **Thales**
**92200 Neuilly-sur-Seine (FR)**

(72) Inventeur: **Ferreol, Anne,**
**c/o Thales Intellectual Property**
**94117 Arcueil Cedex (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
• VANDERVEEN M C ET AL: "Joint angle and delay estimation (JADE) for signals in multipath environments" SIGNALS, SYSTEMS AND COMPUTERS, 1996. CONFERENCE RECORD OF THE THIRTIETH ASILOMAR CONFERENCE ON PACIFIC GROVE, CA, USA 3-6 NOV. 1996, LOS ALAMITOS, CA, USA,IEEE COMPUT. SOC, US, 3 novembre 1996 (1996-11-03), pages 1250-1254, XP010231347 ISBN: 0-8186-7646-9

• VAN DER VEEN A-J ET AL: "SI-JADE: an algorithm for joint angle and delay estimation using shift-invariance properties" SIGNAL PROCESSING ADVANCES IN WIRELESS COMMUNICATIONS, FIRST IEEE SIGNAL PROCESSING WORKSHOP ON PARIS, FRANCE 16-18 APRIL 1997, NEW YORK, NY, USA,IEEE, US, 16 avril 1997 (1997-04-16), pages 161-164, XP010251458 ISBN: 0-7803-3944-4

• SEE C-M S ET AL: "Estimating directions and times of arrival of multipath signals using a calibrated space-time antenna array" STATISTICAL SIGNAL AND ARRAY PROCESSING, 1998. PROCEEDINGS., NINTH IEEE SP WORKSHOP ON PORTLAND, OR, USA 14-16 SEPT. 1998, NEW YORK, NY, USA,IEEE, US, 14 septembre 1998 (1998-09-14), pages 364-367, XP010317903 ISBN: 0-7803-5010-3

• CHEVALIER P ET AL: "Behaviour of higher order blind source separation methods in the presence of cyclostationary correlated multipaths" HIGHER-ORDER STATISTICS, 1997., PROCEEDINGS OF THE IEEE SIGNAL PROCESSING WORKSHOP ON BANFF, ALTA., CANADA 21-23 JULY 1997, LOS ALAMITOS, CA, USA,IEEE COMPUT. SOC, US, 21 juillet 1997 (1997-07-21), pages 363-367, XP010239783 ISBN: 0-8186-8005-9

• CARDOSO J F ET AL: "BLIND BEAMFORMING FOR NON-GAUSSIAN SIGNALS" IEE PROCEEDINGS F. COMMUNICATIONS, RADAR & SIGNAL PROCESSING, INSTITUTION OF ELECTRICAL ENGINEERS. STEVENAGE, GB, vol. 140, no. 6, 1 décembre 1993 (1993-12-01), pages 362-370, XP000605067 ISSN: 0956-375X

**Description**

La présente invention concerne un procédé d'estimation spatio-temporelle d'un ou de plusieurs émetteurs dans un réseau antennaire lorsque l'onde émise par un émetteur se propage sous la forme de multi-trajets.

Les multi-trajets existent lorsqu'une onde émise par un émetteur se propage suivant plusieurs trajets en direction d'un récepteur ou d'un système de goniométrie. Les trajets multiples sont dus notamment à la présence d'obstacles présents entre un émetteur et un récepteur.

Le domaine de l'invention concerne notamment celui de la goniométrie de sources radio-électrique, le mot source désignant un émetteur. Le terme goniométrie signifie une « estimation d'incidences ».

Il est aussi celui du filtrage spatial qui a pour objectif de synthétiser une antenne dans la direction de chacun des émetteurs à partir d'un réseau d'antennes.

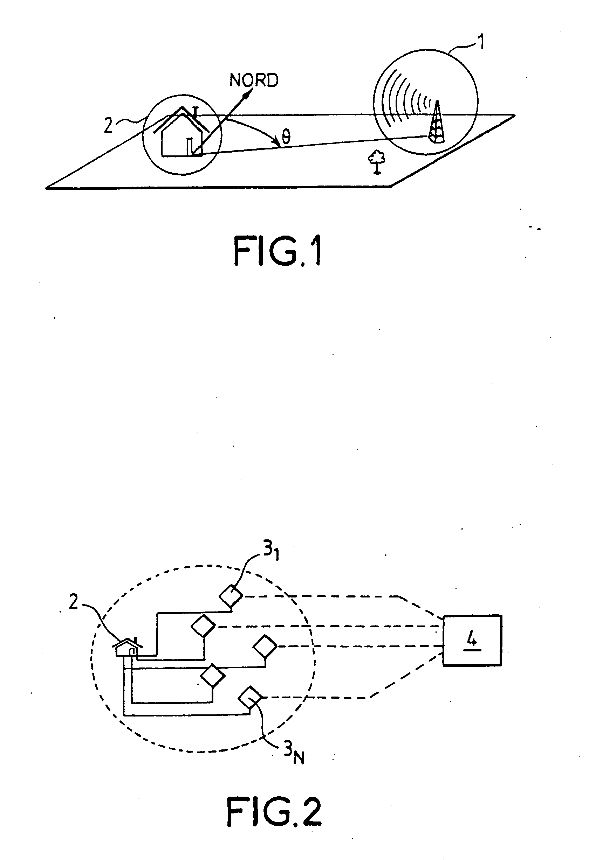

Un système de radiogoniométrie classique a pour objectif d'estimer l'incidence d'un émetteur, c'est-à-dire les angles d'arrivées d'ondes radioélectriques incidentes sur un réseau 1 de N capteurs d'un système de réception 2, par exemple un réseau de plusieurs antennes comme il est représenté aux figures 1 et 2. Le réseau de N capteurs est couplé à un dispositif de calcul 4 par l'intermédiaire de N récepteurs afin d'estimer les angles d'incidence $\theta_p$ des ondes radioélectriques émises par différentes sources p ou émetteurs et qui sont reçues par le réseau.

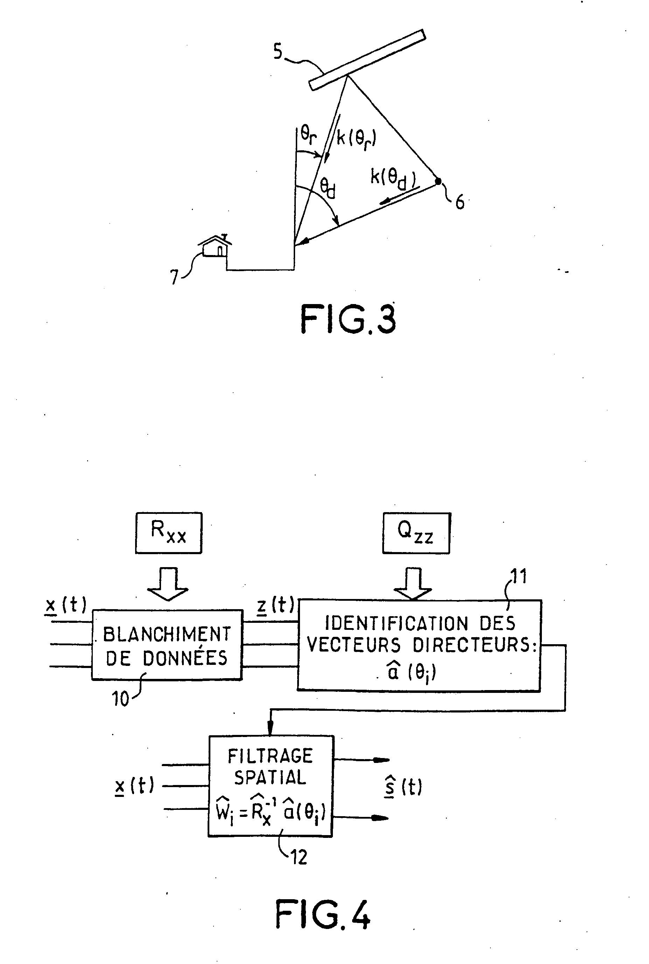

L'onde émise par l'émetteur peut se propager suivant plusieurs trajets selon un schéma donné à la figure 3. L'onde k ($\theta_d$) a un trajet direct d'incidence $\theta_d$ et l'onde k($\theta_r$) un trajet réfléchi d'incidence $\theta_r$. Les multi-trajets sont provoqués notamment par des obstacles 5 situés entre l'émetteur 6 et le système de réception 7. Au niveau de la station de réception, les différents trajets arrivent avec différentes incidences $\theta_{op}$ où p correspond au pième trajet. Les multi-trajets suivent des chemins de propagation différents et sont donc reçus à des instants $t_{mp}$ différents.

Les N antennes du système de réception reçoivent le signal $x_n(t)$ où n est l'indice du capteur. A partir de ces N signaux $x_n(t)$ on construit le vecteur d'observation :

$$\underline{x}(t) = \begin{bmatrix} x_1(t) \\ \cdot \\ \cdot \\ x_n(t) \end{bmatrix} \qquad (1)$$

En présence de M émetteurs ce vecteur d'observation $\underline{x}(t)$ s'écrit de la manière suivante :

$$\underline{x}(t) = \sum_{m=1}^{M} \sum_{p=1}^{P_m} \rho_{mp}\, \underline{a}(\theta_{mp})\, s_m(t-\tau_{mp}) + \underline{b}(t) \qquad (2)$$

où

- $\underline{a}(\theta_{mp})$ est le vecteur directeur du p$^{ième}$ trajet du m$^{ième}$ émetteur. Le vecteur $\underline{a}(\theta)$ est la réponse du réseau de N capteurs à une source d'incidence $\theta$
- $\rho_{mp}$ est le facteur d'atténuation du p$^{ième}$ trajet du m$^{ième}$ émetteur
- $\tau_{mp}$ est le retard du p$^{ième}$ trajet du m$^{ième}$ émetteur
- $P_m$ est le nombre de multi-trajets du m$^{ième}$ émetteur
- $s_m(t)$ est le signal émis par le m$^{ième}$ émetteur
- $\underline{b}(t)$ est le vecteur bruit composé du bruit additif $b_n(t)$ ($1 \leq n \leq N$) sur chacun des capteurs.

L'art antérieur décrit différentes techniques de goniométrie, de séparation de sources, et de goniométrie après séparation de sources.

Ces techniques consistent à estimer les signaux $s_m(t-\tau_{mp})$ à partir du vecteur observation $\underline{x}(t)$ sans aucune connaissance de leurs propriétés temporelles. Ces techniques sont dites aveugles. La seule hypothèse est que les signaux $s_m(t-\tau_{mp})$ sont statistiquement indépendants pour un trajet p tel que $1 \leq p \leq P_m$ et un émetteur m tel que $1 \leq m \leq M$. Sachant que la corrélation entre les signaux $s_m(t)$ et $s_m(t-\tau)$ est égale à l'ordre 2 à la fonction d'autocorrélation $r_{sm}(\tau)=E[s_m(t)\, s_m(t-\tau)^*]$ du signal $s_m(t)$, on en déduit que les multi-trajets d'un même émetteur de signal $s_m(t)$ sont dépendants car la fonction $r_{sm}(\tau)$ est non nulle. Toutefois deux émetteurs différents m et m', de signaux respectifs $s_m(t)$ et $s_{m'}(t)$, sont statistiquement indépendants s'il vérifie la relation $E[s_m(t)\, s_{m'}(t)^*]=0$, où $E[.]$ est l'espérance mathématique. Dans ces conditions, ces techniques peuvent fonctionner lorsque l'onde se propage sous forme de monotrajet, lorsque $P_1=...=P_M=1$. Le vecteur observation $\underline{x}(t)$ s'exprime alors par:

$$\underline{x}(t) = \sum_{m=1}^{M} \underline{a}(\theta_m)\, s_m(t) + \underline{b}(t) = A\, \underline{s}(t) + \underline{b}(t) \qquad (3)$$

où $A=[\,\underline{a}(\theta_1) ... \underline{a}(\theta_M)]$ est la matrice des vecteurs directeurs des sources et $\underline{s}(t)$ est le vecteur source tel que $s(t)=[s_1(t) ... s_M(t)]^T$ (où l'exposant T désigne le transposé du vecteur u qui vérifie dans le cas présent u = s(t)).

Ces méthodes consistent à construire une matrice W de dimension (N x M), appelée séparateur, générant à chaque instant t un vecteur $\underline{y}(t)$ de dimension M qui correspond à une matrice diagonale et, à une matrice de permutation près, à une estimée du vecteur source $\underline{s}(t)$ des enveloppes des M signaux d'intérêt pour le récepteur. Cette problématique de séparation de sources peut être résumée par l'expression suivante de la sortie vectorielle désirée à l'instant t du séparateur linéaire *W*:

$$\underline{y}(t) \;=\; W^H \underline{x}(t) \;=\; \Pi\, \Lambda\, \hat{\underline{s}}(t) \qquad (4)$$

où $\Pi$ et $\Lambda$ correspondent à des matrices respectivement de permutation et diagonale arbitraires de dimension M et où $\hat{\underline{s}}(t)$ est une estimée du vecteur $\underline{s}(t)$. $W^H$ désigne l'opération de transposition et de conjugaison de la matrice W.

Ces méthodes font intervenir les statistiques d'ordre 2 et 4 du vecteur observation $\underline{x}(t)$.

### *Statistique d'ordre 2 : Matrice de covariance*

La matrice de corrélation du signal $\underline{x}(t)$ est définie par l'expression suivante :

$$R_{xx} = E[\underline{x}(t)\, \underline{x}(t)^H] \qquad (5)$$

Sachant que le vecteur source $\underline{s}(t)$ est indépendant du bruit $\underline{b}(t)$ on en déduit d'après (3) que :

$$R_{xx} = A\, R_{ss}\, A^H + \sigma^2\, I \qquad (6)$$

Où

$$R_{ss} = E[\underline{s}(t)\, \underline{s}(t)^H] \;\; \text{et} \;\; E[\underline{b}(t)\, \underline{b}(t)^H] = \sigma^2\, I.$$

L'estimée de $R_{xx}$ utilisée est telle que :

$$\hat{R}_{xx} \;=\; \frac{1}{T} \sum_{t=1}^{T} \underline{x}(t)\, \underline{x}(t)^H \qquad (7)$$

où T correspond à la période d'intégration.

### *Statistique d'ordre 4 : Quadricovariance*

Par extension de la matrice de corrélation, on définit à l'ordre 4 la quadricovariance dont les éléments sont les cumulants des signaux capteurs $x_n(t)$:

$$Q_{xx}(i,j,k,l) = \text{cum}\{ \, x_i(t) \, , \, x_j(t)^* \, , \, x_k(t)^* \, , \, x_l(t) \, \} \tag{8}$$

Avec

$$\text{Avec cum}\{ \, y_i \, , \, y_j \, , \, y_k \, , \, y_l \, \} = E[y_i \; y_j \; y_k \; y_l] - E[y_i \; y_j][ \, y_k \; y_l]$$
$$- E[y_i \; y_k][ y_j \; y_l] \tag{9}$$
$$- E[y_i \; y_l][ y_j \; y_k]$$

Sachant que N est le nombre de capteurs, les éléments $Q_{xx}(i,j,k,l)$ sont stockés dans une matrice $Q_{xx}$ à la ligne numéro N(j-l)+i et à la colonne numéro N(l-1)+k. $Q_{xx}$ est donc une matrice de dimension $N^2xN^2$.

Il est également possible d'écrire la quadricovariance des observations $\underline{x}(t)$ à partir des quadricovariances des sources et du bruit notées respectivement $Q_{ss}$ et $Q_{bb}$. Ainsi d'après l'expression (3) on obtient :

$$Q_{xx} = \sum_{i,j,k,l} Q_{ss}(i,j,k,l)[\underline{a}(\theta_i) \otimes \underline{a}(\theta_j)^*][\underline{a}(\theta_k) \otimes \underline{a}(\theta_l)^*]^H + Q_{bb} \tag{10}$$

où $\otimes$ désigne le produit de Kronecker tel que :

$$\underline{u} \otimes \underline{v} = \begin{bmatrix} \underline{u} \; v_1 \\ . \\ \underline{u} \; v_K \end{bmatrix} \text{ où } \underline{v} = \begin{bmatrix} v_1 \\ . \\ v_K \end{bmatrix} \tag{11}$$

Remarquons qu'en présence de sources indépendantes l'égalité (12) suivante est obtenue:

$$Q_{xx} = \sum_{m=1}^{M} Q_{ss}(m,m,m,m) \; [\underline{a}(\theta_m) \otimes \underline{a}(\theta_m)^*] \; [\underline{a}(\theta_m) \otimes \underline{a}(\theta_m)^*]^H + Q_{bb}$$

Car $Q_{ss}(i,j,k,l)=0$ pour $i \neq j \neq k \neq l$. Par ailleurs en présence d'un bruit gaussien la quadricovariance $Q_{bb}$ du bruit s'annule et conduit à (13) :

$$Q_{xx} = \sum_{m=1}^{M} Q_{ss}(m,m,m,m) \; [\underline{a}(\theta_m) \otimes \underline{a}(\theta_m)^*] \; [\underline{a}(\theta_m) \otimes \underline{a}(\theta_m)^*]^H$$

Un exemple de méthode de séparation de sources connue est la méthode de Souloumiac-Cardoso qui est décrite par exemple dans le document [1] intitulé, "Blind Beamforming for Non Gaussian Signals", ayant pour auteurs J.F. CARDOSO, A. SOULOUMIAC, publié dans la revue IEE Proc-F, Vol 140, N°6, pp 362-370, Dec 1993.

La figure 3 schématise le principe de cette méthode de séparation basée sur l'indépendance statistique des sources : dans ces conditions les matrices $R_{ss}$ et $Q_{ss}$ des expressions (6) et (10) sont diagonales. Cette figure montre que l'algorithme de traitement du vecteur d'observation correspondant aux signaux reçus sur le réseau de capteurs est composé d'une étape de blanchiment 10 des données x(t) conduisant à un vecteur d'observation $\underline{z}(t)$ et d'une étape d'identification 11 des vecteurs directeurs suivie éventuellement d'une étape de filtrage spatial 12 utilisant le vecteur signal $\underline{x}(t)$ pour obtenir un vecteur signal estimé $\underline{\hat{s}}(k)$. L'étape de blanchiment utilise la matrice de covariance $R_{xx}$ afin d'orthonormaliser la base des vecteurs directeurs $\underline{a}(\theta_1)...\underline{a}(\theta_M)$. La deuxième étape d'identification utilise la quadricovariance $Q_{zz}$ pour identifier les vecteurs directeurs précédemment orthonormalisés.

Les coefficients de l'étape de filtrage spatial $W_i$ sont définis de la manière suivante

$$w_i = a R_x^{-1} a(\theta_i)$$

### Etape de blanchiment

Le but du blanchiment est d'orthogonaliser la matrice de mélange A à estimer. Pour cela il faut multiplier les observations $\underline{x}(t)$ par une matrice $\Theta^{-1}$ telle que la matrice de covariance des observations non bruitées et blanchies soit égale à l'identité. Notons $\underline{z}(t)$ le vecteur des observations bruitées et blanchies :

$$\underline{z}(t) = \Theta^{-1} \underline{x}(t) = \Theta^{-1} A \underline{s}(t) + \Theta^{-1} \underline{b}(t) \qquad (14)$$

La matrice $\Theta$ de dimension NxM doit alors vérifier d'après (6) la relation suivante:

$$\Theta\Theta^H = R_{xx} - R_{bb} = A R_{ss} A^H \qquad (15)$$

Sachant que $E[\underline{b}(t) \underline{b}(t)^H] = \sigma^2 I$, on en déduit d'après (6) que la décomposition en éléments propres de $R_{xx}$ vérifie :

$$R_{xx} = E_s \Lambda_s E_s^H + \sigma^2 E_b E_b^H \qquad (16)$$

Où $\Lambda_s$ est une matrice diagonale de dimension MxM contenant les M plus fortes valeurs propres de $R_{xx}$. La matrice $E_s$ de dimension NxM est composée des vecteurs propres associés aux plus fortes valeurs propres de $R_{xx}$ et la matrice $E_b$ de dimension Nx(N-M) est composée des vecteurs propres associés à la valeur propre de bruit $\sigma^2$. Sachant d'une part que $R_{bb} = E[\underline{b}(t) \underline{b}(t)^H] = \sigma^2 I$ et que d'autre part par définition de la décomposition en éléments propres que $(E_s E_s^H + E_b E_b^H) = I$, on en déduit d'après (15) que :

$$\Theta\Theta^H = A R_{ss} A^H = E_s (\Lambda_s - \sigma^2 I_M) E_s^H \qquad (17)$$

On peut alors prendre pour matrice $\Theta$ la matrice suivante de dimension NxM.

$$\Theta = E_s (\Lambda_s - \sigma^2 I_M)^{1/2} \qquad (18)$$

D'après (17) on en déduit que la matrice $\Theta$ vaut aussi :

$$\Theta = A R_{ss}^{1/2} U^H \qquad \text{avec} \quad U^H U = I_M \qquad (19)$$

U est alors une matrice unitaire dont les colonnes sont formées par des vecteurs orthonormés. D'après (3)(14) et (19) le vecteur $\underline{z}(t)$ de dimension Mx1 a l'expression suivante :

$$\underline{z}(t) = U\underline{s}'(t) + \Theta^{-1}\underline{b}(t) \quad \text{avec} \quad \underline{s}'(t) = R_{ss}^{-1/2} \underline{s}(t) \qquad (20)$$

En présence de sources décorrélées les matrices $R_{ss}$ et $R_{ss}^{-1/2}$ sont diagonales et ainsi les composantes des vecteurs $\underline{s}'(t)$ et $\underline{s}(t)$ sont égaux à une amplitude près telle que :

$$\underline{s}'(t) = \begin{bmatrix} s_1(t)/\sqrt{\gamma_1} \\ . \\ s_M(t)/\sqrt{\gamma_M} \end{bmatrix} \quad \text{où} \quad \underline{s}(t) = \begin{bmatrix} s_1(t) \\ . \\ s_M(t) \end{bmatrix} \quad \text{et} \quad R_{ss} = \begin{bmatrix} \gamma_1 & . & 0 \\ . & . & . \\ 0 & . & \gamma_M \end{bmatrix}$$

La matrice U est composée des vecteurs directeurs blanchies tel que :

$$U = [\underline{t}_i \ \dots \ \underline{t}_M] \tag{21}$$

### Etape d'identification

Cette étape a pour but d'identifier la matrice unitaire U composée des M vecteurs directeurs blanchis $t_m$. D'après (20) et (21) l'expression de $\underline{z}(t)$ des observations blanchies est la suivante :

$$\underline{z}(t) = U\,\underline{s}'(t) + \Theta^{-1}\underline{b}(t) = \sum_{m=1}^{M} \underline{t}_M\, s'_m(t) + \underline{b}'(t) \tag{22}$$

$$\text{avec } s'_m(t) = s_m(t)/\sqrt{\gamma_m} \quad \text{et} \quad \underline{b}'(t) = \Theta^{-1}\underline{b}(t).$$

avec $s'_m(t) = s_m(t)/\sqrt{\gamma_m}$ et $\underline{b}'(t) = \Theta^{-1}\underline{b}(t)$.

Sachant que les M sources de signal $s'_m(t)$ sont indépendantes on en déduit d'après (13) que la quadricovariance de $\underline{z}(t)$ s'écrit de la façon suivante :

$$Q_{zz} = \sum_{m=1}^{M} Q_{s's'}(m,m,m,m)\ [\underline{t}_m \otimes \underline{t}_m^{*}\,]\,[\underline{t}_m \otimes \underline{t}_m^{*}\,]^{H} \tag{23}$$

Dans ces conditions la matrice $Q_{zz}$ de dimension $M^2 \times M^2$ est de rang M. Une diagonalisation de $Q_{zz}$ nous permet alors de récupérer les vecteurs propres associés aux M plus grandes valeurs propres. Ces vecteurs propres s'écrivent de la manière suivante :

$$\underline{e}_m = \sum_{i=1}^{M} \alpha_{mi}\left(\underline{t}_i \otimes \underline{t}_i^{*}\right) \quad pour\, m = 1\cdots M \tag{24}$$

On transforme alors chaque vecteur $\underline{e}_m$ de longueur $M^2$ en une matrice $U_m$ de dimension $(M \times M)$ dont les colonnes sont les $M$ M-uplets constituant le vecteur $\underline{e}_m$.

$$U_m = \begin{pmatrix} e_{m,1} & e_{m,M+1} & \cdot & e_{m,(M-1)M+1} \\ \cdot & \cdot & \cdot & \cdot \\ \cdot & \cdot & \cdot & \cdot \\ e_{m,M} & e_{m,2M} & \cdot & e_{m,M^2} \end{pmatrix} \quad avec \quad \underline{e}_m = \begin{pmatrix} e_{m,1} \\ \cdot \\ e_{m,M} \\ \cdot \\ \cdot \\ e_{m,(M-1)M+1} \\ \cdot \\ e_{m,M^2} \end{pmatrix}$$

$$(25)$$

ce qui s'écrit également d'après l'équation (24) :

$$U_m = \sum_{i=1}^{M} \alpha_{mi} \underline{t}_i \underline{t}_i^H = U \delta_m U^H \qquad (26)$$

où $\delta_m$ est une matrice diagonale d'éléments $\alpha_{mi}$. Pour identifier la matrice U, il suffit de diagonaliser les matrices propres $U_m$ pour $1 \leq m \leq M$ car la matrice U a la propriété d'être unitaire grâce à l'étape de blanchiment. La référence [1] propose un algorithme de diagonalisation conjointe des M matrices $U_m$.

Connaissant les matrices U et $\Theta$ on peut en déduire d'après (19) la matrice A des vecteurs directeurs tel que :

$$\Theta U = A R_{ss}^{1/2} = [ \underline{a}'_1 \dots \underline{a}'_M ] \qquad avec \qquad \underline{a}'_m = \underline{a}(\theta_m) \times \sqrt{\gamma_m} \qquad (27)$$

On identifie donc les vecteurs directeurs $\underline{a}(\theta_m)$ des sources a un coefficient multiplicatif près $\sqrt{\gamma_m}$. D'après les expressions (20) et (14) et connaissant les matrices U et $\Theta$ on en déduit l'estimée du vecteur sources $\underline{s}'(t)$ telle que :

$$\underline{\hat{s}}'(t) = U^H \Theta^{-1} \underline{x}(t) \qquad où \qquad \underline{\hat{s}}'(t) = \begin{bmatrix} \hat{s}_1(t)/\sqrt{\gamma_1} \\ \cdot \\ \cdot \\ \hat{s}_M(t)/\sqrt{\gamma_M} \end{bmatrix}$$

$$sachant \ que \qquad R_{ss} = \begin{bmatrix} \gamma_1 & \cdot & 0 \\ \cdot & \cdot & \cdot \\ \cdot & \cdot & \cdot \\ 0 & \cdot & \gamma_M \end{bmatrix} \qquad (28)$$

On estime donc les signaux $s_m(t)$ a un coefficient multiplicatif près valant $\left( 1/\sqrt{\gamma_m} \right)$ tel que :

$$\hat{s}'_m(t) = \left( 1/\sqrt{\gamma_m} \right) \hat{s}_m(t) \qquad (29)$$

**Comportement en présence de multi-trajets**

Sachant que, pour un émetteur m donné, les signaux $s_m(t)$ et $s_m(t-\tau)$ sont corrélés, il est possible de déduire l'existence d'une dépendance entre les multi-trajets de signal $s_m(t-\tau_{mp})$ avec $1 < p < P_m$.

Il a été montré dans la référence [2] ayant pour auteurs P. CHEVALIER, V. CAPDEVIELLE, P. COMON, intitulée "Behaviour of HO blind source separation methods in the presence of cyclostationary correlated multipaths", publiée dans la revue IEEE SP Workshop on HOS, Alberta (Canada), July 1997, que la méthode de séparation de sources sépare les émetteurs sans séparer leurs multi-trajets. Ainsi, en prenant le modèle de signal de l'expression (2) pour le $m^{ième}$ émetteur on identifie les $P_m$ vecteurs suivants :

$$\underline{u}_{mp} = \sum_{i=1}^{P_m} \beta_{mpi} \, \underline{a}(\theta_{mi}) \qquad pour \qquad 1 \leq p \leq P_m \qquad (30)$$

De même pour le $m^{ième}$ émetteur on identifie les $P_m$ signaux suivants :

$$\hat{s}'_{mp}(t) = \sum_{i=1}^{P_m} \beta_{mpi}' \, \hat{s}_m(t-\tau_{mi}) \qquad pour \qquad 1 \leq p \leq P_m \qquad (31)$$

Ces techniques de séparation des sources supposent, pour être efficaces, que les signaux se propagent suivant un seul trajet. Les signaux émis par chacun des émetteurs sont considérés comme statistiquement indépendants.

En présence de mono-trajet où $P_1 = ... = P_m = 1$, les sources sont toutes indépendantes et les M vecteurs identifiés en sortie de séparation ont, d'après la relation (27), la structure suivante :

$$\underline{a}'_m = \beta_m \, \underline{a}(\theta_m) \quad pour \ 1 \leq m \leq M \qquad (32)$$

Pour chaque émetteur on constitue le projecteur bruit $\Pi_{bm}$ suivant :

$$\Pi_{bm} = I_N - \frac{\underline{a}'_m \, \underline{a}'^H_m}{\underline{a}'^H_m \cdot \underline{a}'_m} \quad pour \ 1 \leq m \leq M \qquad (33)$$

En appliquant le principe de MUSIC on cherche alors l'incidence $\hat{\theta}_m$ du $m^{ième}$ émetteur qui annule le critère suivant :

$$\hat{\theta}_m = \min_{\theta} \left\{ \underline{a}(\theta)^H \Pi_{bm} \underline{a}(\theta) \right\} \quad pour \ 1 \leq m \leq M \qquad (34)$$

Le principe de l'algorithme MUSIC est par exemple décrit dans le document [3] de R.O.Schmidt intitulé « A signal subspace approach to multiple emitters location and spectral estimation, PhD Thesis, Stanford University, CA, Nov 1981.

Ainsi à partir des vecteurs $\underline{a}'_1 \, ... \, \underline{a}'_M$ identifiés en sortie de séparation de sources il est possible de déduire les incidences $\hat{\theta}_1 ... \hat{\theta}_M$ pour chacun des émetteurs. Toutefois il faut que les sources soient décorrélées pour que les vecteurs identifiés vérifient la relation $\underline{a}'_m = \beta_m \, \underline{a}(\theta_m)$.

Par exemple, dans le document [4] intitulé "Direction finding after blind identification of sources steering vectors: The Blind-Maxcor and Blind-MUSIC methods", ayant pour auteurs P. CHEVALIER, G. BENOIT, A. FERREOL, et publié dans la revue Proc. EUSIPCO, Triestre, Sept 1996, il est appliqué un algorithme blind-MUSIC de la même famille que l'algorithme MUSIC connu de l'Homme du métier.

Dans le document intitulé « Joint angle and delay estimation (JADE) for signals in multipath environments » signals, systems and computers, 1996, conference record of the thirtieth asimolar conference on pacifie grove, CA, USA 3-6 nov. 1996, Los Alamitos, USA, IEEE comput.soc, US, 3 novembre 1996, pages 1250-1254, XP010231347, l'auteur décrit une méthode dans laquelle l'estimation temporelle repose sur la connaissance de la matrice de canal d'un seul utilisateur. Cette matrice peut être obtenue à partir d'une séquence d'apprentissage, en conséquence, l'algorithme proposé par l'auteur est coopératif.

Les techniques connues de l'art antérieur permettent donc de déterminer les incidences pour les différents émetteurs dans le cas où l'onde émise pour chacun de ces émetteurs se propage sous la forme de mono-trajet.

L'invention concerne un procédé et un dispositif qui permettent notamment de déterminer, pour chaque émetteur se propageant sous la forme de multi-trajets, les incidences des angles d'arrivée pour les multi-trajets.

L'objectif de la présente invention est de réaliser une goniométrie sélective par émetteur en présence de multi-trajets, c'est-à-dire pour $P_m > 1$.

Une des méthodes mises en oeuvre par l'invention est de regrouper les signaux reçus par émetteur, avant d'effectuer la goniométrie de tous ces multi-trajets pour chaque émetteur, par exemple.

Une autre façon de procéder consiste à séparer les sources ou émetteurs de manière spatio-temporelle.

Dans la présente description, les termes ci-après sont définis :

Ambiguïtés : on est en présence d'une ambiguïté lorsque l'algorithme de goniométrie peut estimer de façon équiprobable, soit l'incidence réelle de la source, soit une autre incidence très différente. Plus on souhaite goniométrer de sources simultanément plus le risque d'ambiguïté est important.

Multi-trajets : se dit lorsque l'onde émise par un émetteur se propage suivant plusieurs trajets en direction du système de goniométrie. Les trajets multiples sont dus à la présence d'obstacles entre un émetteur et un récepteur.

Aveugle : sans connaissance à priori des sources émettrices.

L'invention concerne un procédé d'estimation spatio-temporelle des angles d'incidence de plusieurs émetteurs dans un réseau antennaire **caractérisé en ce qu'**il comporte au moins les étapes suivantes :

➢ une étape de séparation des émetteurs afin d'obtenir les différents signaux de sorties $\hat{s}'_{mp}$ (t) reçus par le réseau d'antennes,
➢ une étape de regroupement des sorties appartenant à un même émetteur par intercorrélation, et
➢ une étape de détermination des différents angles d'arrivée $\theta_{mP_m}$ des multitrajets p émis par chacun des émetteurs.

L'étape de regroupement des différents signaux par émetteur comporte par exemple:

➢ une étape d'intercorrélation deux par deux des composantes $u_k(t)$ du vecteur signal s'(t) issu de l'étape de séparation des sources,
➢ une étape de recherche de la ou des valeurs des retards permettant d'obtenir une valeur maximale pour la fonction d'intercorrélation, $r_{kk'}(\tau) = E[u_k(t)u_{k'}(t-\tau)^*]$,
➢ une étape de mémorisation des différents indices des trajets pour lesquels la fonction de corrélation est maximale.

Le procédé comporte par exemple une étape de détermination des temps de retard à partir des incidences $\theta_{mi}$, du signal $\underline{s}_m(t)$ et de la recherche du maximum du critère Cri $_i(\delta\tau)$ pour obtenir $\delta\tau_{mi}=\tau_{mi} - \tau_{m1}$, avec Cri$_i(\delta\tau)=E[s_m(t)(i)s_m(t- \delta\tau)(1)^*]$.

L'invention concerne aussi un procédé d'estimation spatio-temporelle des angles d'incidence de plusieurs émetteurs dans un réseau antennaire **caractérisé en ce qu'**il comporte au moins les étapes suivantes **caractérisé en ce qu'**il comporte au moins les étapes suivantes :

➢ une étape de séparation spatio-temporelle des différents émetteurs avant de déterminer les différents angles d'arrivée $\theta_{mi}$,
➢ une étape d'identification et d'élimination des sorties associées au même émetteur après avoir déterminé les angles $\theta_{mi}$.

L'étape de séparation spatio-temporelle comporte par exemple une étape où pour un émetteur donné le signal $s_m(t)$ est retardé, assimilant ainsi le signal retardé à la sortie d'un filtre de longueur $L_m$, dont les entrées sont $s_m(t)$ jusqu'à $s_m(t-\tau_m)$, avant d'appliquer la séparation de sources.

Le procédé peut comporter une étape d'identification et d'élimination des sorties associées au même émetteur après avoir déterminé les angles $\theta_{mi}$.

Le procédé met en oeuvre, par exemple, des méthodes de goniométrie de tous types, tels que des méthodes à haute résolution comme en particulier MUSIC, des méthodes par interférométrie.

L'invention concerne aussi un dispositif pour réaliser une estimation spatio-temporelle d'un ensemble d'émetteurs qui émettent des ondes se propageant sous la forme de multitrajets dans un réseau de N capteurs **caractérisé en ce qu'**il comporte un calculateur adapté à mettre en oeuvre les étapes du procédé caractérisé par les étapes données ci-dessus.

Le procédé selon l'invention permet notamment de réaliser une goniométrie séparée des émetteurs. Ainsi, seules les incidences des multi-trajets d'un émetteur donné sont déterminées.

Dans ces conditions, par rapport à une technique classique qui doit localiser simultanément tous les émetteurs avec leurs multi-trajets, le procédé permet de goniométrer moins de sources.

D'autres avantages et caractéristiques de l'invention apparaîtront mieux à la lecture de la description donnée à titre illustratif et nullement limitatif qui suit en relation des figures qui représentent :

- La figure 1 un système d'émission réception et la figure 2 un réseau de N capteurs,
- La figure 3 les trajets possibles des ondes émises pour un émetteur,
- La figure 4 une méthode de séparation de sources selon l'art antérieur,
- La figure 5 un schéma des différentes étapes d'une première méthode selon l'invention d'association de sources et la figure 6 l'algorithme de traitement associé,
- La figure 7 une deuxième variante avec séparation de sources spatio-temporelle,
- La figure 8 un exemple de spectre obtenu.

Le système d'acquisition qui est décrit à la figure 2 comporte un réseau 2 constitué de N antennes $3_1$ à $3_N$ en liaison avec un calculateur 4 adapté notamment à mettre en oeuvre les différentes étapes du procédé selon l'invention. Le calculateur est par exemple adapté pour déterminer les angles d'arrivée pour chaque émetteur 1i (figure 1) émettant une onde pouvant se propager sous la forme de multi-trajets conformément au schéma de la figure 1. Le calculateur est pourvu de moyens permettant de réaliser la goniométrie de chacun des émetteurs 1i.

Les capteurs ou antennes du système de réception reçoivent des signaux $x_n(t)$ tels que décrits précédemment, ce qui permet, à partir des N antennes, de construire le vecteur d'observation x(t).

On rappelle qu'en présence de multi-trajets, on identifie pour le $m^{ième}$ émetteur, $P_m$ trajets pour la propagation de l'onde émise et les $P_m$ vecteurs suivants :

$$\underline{u}_{mp}=\sum_{i=1}^{P_m} \beta_{mpi}\ \underline{a}(\theta_{mi}) \quad \text{pour} \quad 1\leq p\leq P_m$$

avec $\underline{a}(\theta_{mi})$ le vecteur directeur du ième trajet pour le $m^{ième}$ émetteur.
De même, pour ce $m^{ième}$ émetteur on identifie les $P_m$ signaux suivants :

$$\hat{s}'_{mp}(t)=\sum_{i=1}^{P_m} \beta_{mpi}{}'\ \hat{s}_m(t-\tau_{mi}) \quad \text{pour} \quad 1\leq p\leq P_m$$

Les signaux $\hat{s}'_{mp}(t)$ et $\hat{s}'_{mp'}(t)$ en sortie d'une étape de séparation ont de plus pour des trajets p≠p' la caractéristique d'être indépendants en vérifiant : $E[\hat{s}'_{mp}(t)\ \hat{s}'_{mp'}(t)^*]=0$.

L'idée du procédé selon l'invention est de réaliser une goniométrie séparée des émetteurs lorsque l'onde ou les ondes se propagent sous la forme de multitrajets, soit en regroupant les différentes sorties par émetteur, soit en introduisant une étape de séparation de sources spatio-temporelle avant d'effectuer la goniométrie pour chaque émetteur.

**Méthode d'association des sorties de séparation des sources par émetteur**

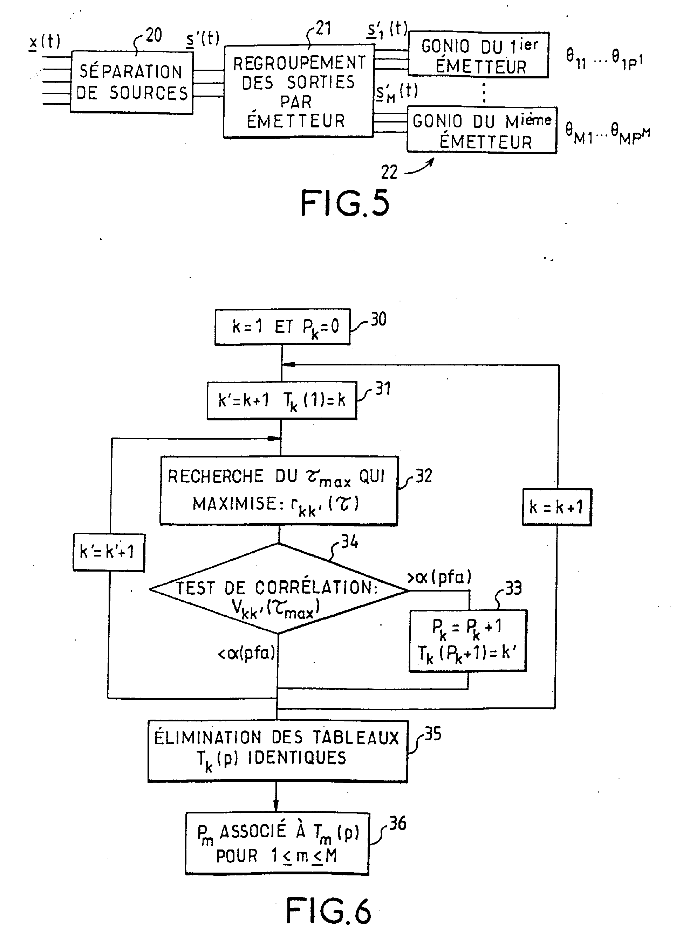

Selon une première mise en oeuvre du procédé décrite à la figure 5, l'invention consiste à détecter les sorties $\hat{s}'_{mp}(t)$ issues de l'étape de séparation 20, de regrouper 21 les sorties appartenant au même émetteur et de réaliser par exemple une étape de goniométrie 22 sur chacune des sorties, ceci pour un émetteur donné.
Le procédé comporte par exemple les étapes suivantes :

a) Séparer, 20, les sources selon une méthode de séparation connue de l'Homme du métier et appliquée sur le vecteur d'observations $\underline{x}(t)$ reçu par le réseau d'antennes. A la fin de cette étape de séparation le procédé connaît un vecteur $\underline{s}'(t)$ de composantes $\hat{s}'_{mp}(t)$ représentatif des différents trajets émis par le $m^{ième}$ émetteur,

b) Regrouper les sorties par émetteur, 21,

c) Corréler deux par deux les composantes du vecteur $\underline{s}'(t)$ issu de l'étape de séparation des sources,

d) Rechercher la valeur du temps retard $\tau_{mp}$ qui permet d'obtenir une valeur maximum des signaux intercorrélés, et mémoriser les trajets correspondants, par exemple dans un tableau étape d).

e) Réaliser une étape de goniométrie, 22, pour chaque émetteur afin d'obtenir les angles $\theta_{mPm}$

En sortie de l'étape a) de séparation, le vecteur $\underline{s}'(t)$ de composante $\hat{s}'_{mp}(t)$ peut s'écrire sous la forme suivante :

$$\underline{\hat{s}}'(t)=\begin{bmatrix} u_1(t) \\ \cdot \\ \cdot \\ u_K(t) \end{bmatrix} \quad \text{où} \quad K=\sum_{m=1}^{M} P_m \quad \text{et} \quad u_k(t)=\hat{s}'_{mp}(t) \qquad (35)$$

D'après l'expression (31), la fonction d'intercorrélation $r_{kk'}(\tau)$ entre les signaux $u_k(t)$ et $u_{k'}(t)$ est non nulle lorsqu'ils sont associés au même émetteur.

$$r_{kk'}(\tau)=E[u_k(t)\ u_{k'}(t-\tau)^*]\neq 0 \quad \text{pour}\ \tau > 0 \quad \text{et}\ k\neq k' \qquad (36)$$

En effet les signaux $u_k(t)$ et $u_{k'}(t)$ sont des combinaisons linéaires différentes des signaux $\hat{s}_m(t-\tau_{mp})$ pour ($1\leq p\leq P_m$). Sachant qu'en sortie de filtrage ces deux signaux sont bruités respectivement par $b_k(t)$ et $b_{k'}(t)$, on obtient alors :

$$u_k(t) \quad = \sum_{i=1}^{P_m} \beta_{ki}' \ \hat{s}_m(t-\tau_{mi}) + b_k(t)$$

$$u_{k'}(t-\tau) = \sum_{i=1}^{P_m} \beta_{k'i}' \ \hat{s}_m(t-\tau_{mi}-\tau) + b_{k'}(t)$$

Le procédé comporte par exemple une étape de recherche de la valeur du retard qui maximise l'intercorrélation entre les sorties $u_k(t)$ et $u_{k'}(t-\tau)$ et une étape de mémorisation des indices k et k' lorsque le maximum est supérieur à un seuil.

Pour tester la corrélation entre $u_k(t)$ et $u_{k'}(t-\tau)$, il est possible d'appliquer un test de détection de type Gardner tel que décrit dans le document ayant pour titre « Detection of the number of cyclostationary signals in unknows interference and noise », pour auteurs SV.Schell et W.Gardner, publié dans Proc of Asilonan conf on signal, systems and computers 5-7 nov 90.

Pour cela, il est possible de calculer le critère de détection suivant :

$$V_{kk'}(\tau)= -2\,T\,\ln\left(1-\frac{|\hat{r}_{kk'}|^2}{\hat{r}_{kk}\,\hat{r}_{k'k'}}\right) \qquad (37)$$

avec

$$\hat{r}_{kk'} =\frac{1}{T}\sum_{i=1}^{T} u_k(t)\,u_{k'}(t-\tau)^* \quad \text{et} \quad \hat{r}_{kk} =\frac{1}{T}\sum_{i=1}^{T} |u_k(t)|^2$$

puis

$$\hat{r}_{k'k'} = \frac{1}{T} \sum_{i=1}^{T} |u_{k'}(t-\tau)|^2$$

Sachant que dans l'hypothèse où $u_k(t) = b_k(t)$ et $u_{k'}(t) = b_{k'}(t)$ le critère $V_{kk'}(\tau)$ suit une loi du chi-2 à deux degrés de libertés et on en déduit le test de corrélation en définissant un seuil $\alpha(pfa)$ :

- Les signaux $u_k(t)$ et $u_{k'}(t)$ sont corrélés $(H_1)$ : $V_{kk'}(\tau) > \alpha(pfa)$
- Les signaux $u_k(t)$ et $u_{k'}(t)$ sont décorrélés $(H_0)$ : $V_{kk'}(\tau) < \alpha(pfa)$

Connaissant la loi de probabilité du critère $V_{kk'}(\tau)$ en hypothèse de bruit seul, on choisit alors le seuil $\alpha(pfa)$ dans une table du chi-2 pour une probabilité de dépasser un seuil donné et avec 2 degrés de libertés.

La figure 6 résume un exemple de mise en oeuvre de la technique de regroupement incluant le test de corrélation.

Pour un émetteur d'indice m donné, le calculateur recherche les valeurs des retards $\tau$ pour lesquels l'énergie reçue par le réseau d'antennes est maximale, en effectuant une intercorrélation deux à deux des signaux issus de la séparation des sources 30, 31, 32, fonction $r_{kk'}(\tau)$. Il mémorise les trajets retenus, conduisant au maximum de la fonction d'intercorrélation, dans un tableau Tk contenant les indices des trajets retenus et les indices des émetteurs, 33, en utilisant le test de corrélation précité et le seuil $\alpha(pfa)$, 34. Puis le procédé élimine les tableaux Tk identiques, par exemple au moyen d'une simple comparaison 35. Le calculateur détermine ensuite le tableau Tm(p), 36, constitué des indices de sorties de séparation des sources associées au même émetteur. A l'issue de ces différentes étapes, le calculateur est capable d'effectuer une goniométrie par émetteur.

A l'issue de ces étapes, le calculateur détermine le nombre M d'émetteurs ainsi que le nombre de trajets Pm pour chaque émetteur . Le tableau Tm obtenu contient les indices des sorties de séparation associé au même émetteur.

**Goniométrie**

Connaissant les trajets pour chaque émetteur, le calculateur effectue par exemple une goniométrie par émetteur de la manière décrite ci-après.

Pour un émetteur constitué de $P_m$ trajets on sait, d'après l'expression (30), que les $P_m$ vecteurs identifiés en sortie de séparation de sources sont tous combinaison linéaire des vecteurs directeurs $\underline{a}(\theta_{mi})$ de ses multi-trajets.

$$\underline{u}_k = \sum_{i=1}^{P_m} \beta_{ki} \, \underline{a}(\theta_{mi}) \quad \text{pour} \quad 1 \leq p \leq P_m \quad \text{sachant que} \quad T_m(p) = k$$

Le tableau $T_m(p)$ est constitué des indices des sorties de séparation de sources associées au même émetteur. Ainsi avec les $P_m$ sorties $\underline{u}_k$ on calcule la matrice de covariance suivante :

$$R_{xm} = \frac{1}{P_m} \sum_{p=1}^{P_m} \underline{u}_{Tm(p)} \, \underline{u}_{Tm(p)}^H \tag{38}$$

Pour estimer les incidences des multi-trajets $\theta_{m1}$ jusqu'à $\theta_{mP_m}$ il suffit d'appliquer n'importe quel algorithme de goniométrie sur la matrice de covariance $R_{xm}$. En particulier on peut appliquer un algorithme à haute résolution tel que MUSIC décrit dans la référence [3]. Il faut remarquer que l'algorithme blind-MUSIC de la référence [4] est un cas particulier de ce dernier algorithme lorsqu'on applique MUSIC avec $P_m = 1$.

**Estimation des temps de retard des trajets du $m^{ième}$ émetteur**

Selon une variante de mise en oeuvre de l'invention, le procédé estime les valeurs des temps de retard des trajets du $m^{ième}$ émetteur.

Dans ce paragraphe, les incidences $\theta_{mi}$ des $P_m$ trajets sont supposées connues pour $1 < i < P_m$, et les vecteurs directeurs $\underline{a}(\theta_{mi})$ associés déduits de ces valeurs. Ces informations sont utilisées par le procédé pour déduire les retards de propagation entre les différents trajets. On sait que les vecteurs $\underline{u}_{mi}$ et les signaux $\hat{s}'_{mp}(t)$ obtenus en sortie de séparation de sources vérifient la relation suivante :

$$\sum_{i=1}^{P_m} \rho_{mi} \ \underline{a}(\theta_{mi}) \ s_m(t - \tau_{mi}) = \sum_{i=1}^{P_m} \underline{u}_{mi} \hat{s}'_{mi}(t) \qquad (40)$$

où $\rho_{mi}$ désigne le facteur d'atténuation du $i^{ème}$ trajet. L'expression (40) peut s'écrire matriciellement de la façon suivante :

$$A_m \ \underline{s}_m(t) = U_m \ \hat{\underline{s}}'_m(t) \qquad (41)$$

En posant : $A_m = [\underline{a}(\theta_{m1})....\underline{a}(\theta_{mPm})]$ et $U_m = [\underline{u}_{m1} ... \underline{u}_{mPm}]$
et

$$\underline{s}_m(t) = \begin{bmatrix} \rho_{m1} s_m(t - \tau_{m1}) \\ . \\ \rho_{mPm} s_m(t - \tau_{mPm}) \end{bmatrix} \text{ puis } \hat{\underline{s}}'_m(t) = \begin{bmatrix} \hat{s}_{m1}(t) \\ . \\ \hat{s}_{mPm}(t) \end{bmatrix}$$

Connaissant la matrice $A_m$ des vecteurs directeurs des multi-trajets ainsi que la matrice $U_m$ des vecteurs identifiés, on en déduit le vecteur $\underline{s}_m(t)$ en fonction du vecteur $\hat{\underline{s}}'_m(t)$ issus de la séparation de sources tel que :

$$\underline{s}_m(t) = A_m^{-1} U_m \ \hat{\underline{s}}'_m(t) \qquad (42)$$

Sachant que la $i^{ème}$ composante de $\underline{s}_m(t)$ vérifie $s_m(t)(i) = \rho_{mi} s_m(t-\tau_{mi})$ on maximise le critère suivant pour estimer le retard $\delta\tau_{mi} = \tau_{mi} - \tau_{m1}$ du $i^{ème}$ trajet par rapport au $1^{ier}$ trajet.

$$Cri_i(\delta\tau) = E[s_m(t)(i)s_m(t - \delta\tau)(1)^*] \text{ tel que } \max_{\delta\tau}(Cri(\delta\tau)) = \delta\tau_{mi} \qquad (43)$$

L'algorithme d'estimation des $\delta\tau_{mi}$ pour $1<i<P_m$ consiste à effectuer les étapes suivantes :

- Etape n°1 : Construction de $A_m = [\ \underline{a}(\theta_{m1})....\underline{a}(\theta_{mPm})]$ à partir des incidences $\theta_{mi}$.
- Etape n°2 : Calcul du signal $\underline{s}_m(t)$ à partir de l'expression (42).
- Etape n°3 : Pour chaque trajet effectuer les opérations suivantes

    - Calcul du critère $Cri_i(\delta\tau)$ de l'expression (43)
    - Maximisation du critère $Cri_i(\delta\tau)$ pour obtenir $\delta\tau_{mi} = \tau_{mi} - \tau_{m1}$.

**Séparation de sources spatio-temporelle**

Une deuxième méthode permettant de mettre en oeuvre l'invention consiste, par exemple, à appliquer la séparation de sources sur l'observation spatio-temporelle $\underline{y}(t) = [\underline{x}(t)^T ... \underline{x}(t-L+1)^T]^T$.

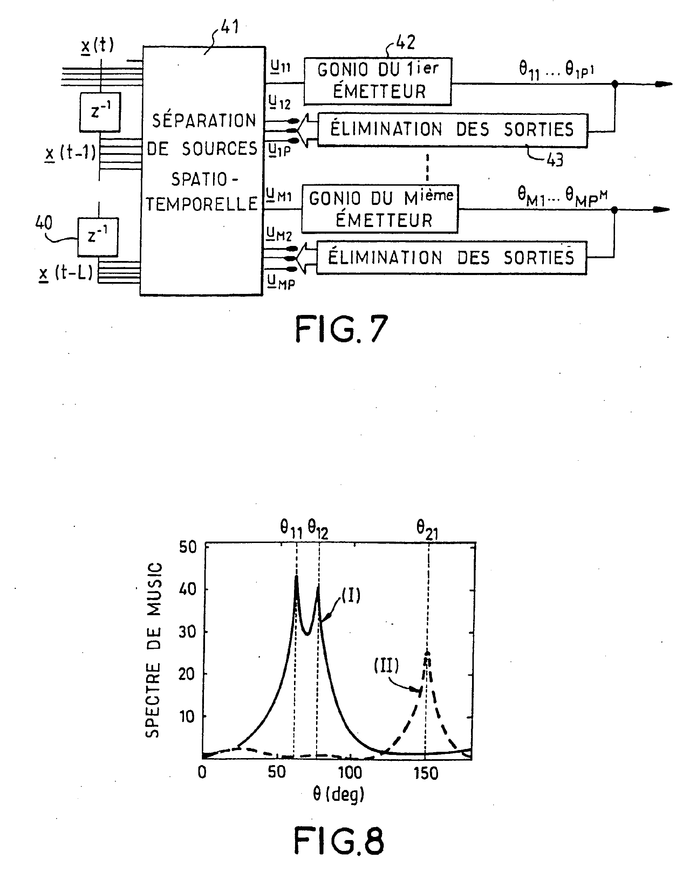

La figure 7 représente un exemple de schéma permettant de dérouler les étapes du procédé.

Grâce à l'utilisation de l'observation spatio-temporelle, il est possible d'appliquer directement, sur chaque sortie de la séparation de sources, une goniométrie des multi-trajets d'un des émetteurs. Comme un émetteur est associé à plusieurs sorties, le procédé comporte une étape d'élimination des sorties associées à l'émetteur que l'on vient de goniométrer.

Cette deuxième variante de réalisation, permet notamment de localiser un nombre de sources plus important qu'à l'aide de la première méthode. En effet, selon cette deuxième variante, le paramètre limitatif est le nombre d'émetteurs (M<N) alors que précédemment, le paramètre limitatif est le nombre total de multi-trajets soit $\Sigma P_m < N$.

Dans cette deuxième variante de mise en oeuvre, le modèle de signal utilisé est celui de l'expression (2). Le procédé comporte tout d'abord une étape 40 de modélisation des signaux $s_m(t)$ en les considérant comme des signaux à réponse impulsionnelle finie de longueur $L_m$. Dans ces conditions le signal retardé $s_m(t\text{-}\tau_{mp})$ est la sortie d'un filtre de longueur $L_m$, dont les entrées sont $s_m(t)$ jusqu'à $s_m(t\text{-}L_m+1)$, soit :

$$s_m(t\text{-}\tau_{mp}) = \sum_{k=1}^{L_m} h_{mp}(k)\, s_m(t\text{-}k+1) \tag{44}$$

En reprenant l'expression (2) on obtient alors l'expression suivante de $\underline{x}(t)$ :

$$\underline{x}(t) = \sum_{m=1}^{M} \sum_{k=1}^{L_m} \underline{h}_m(k)\, s_m(t\text{-}k) + \underline{b}(t) \quad \text{avec} \quad \underline{h}_m(k) = \sum_{p=1}^{P_m} \rho_{mp}\, \underline{a}(\theta_{mp})\, h_{mp}(k) \tag{45}$$

L'observation spatio-temporelle $\underline{y}(t)$ associée à $\underline{x}(t)$ s'écrit de la façon suivante (46) :

$$\underline{y}(t) = \begin{bmatrix} \underline{x}(t) \\ . \\ \underline{x}(t-L+1) \end{bmatrix} = \sum_{m=1}^{M} \sum_{k=1}^{L_m+L} \underline{h}_m{}^L(k)\, s_m(t\text{-}k) + \underline{b}^L(t) \quad \text{avec} \quad \underline{b}^L(t) = \begin{bmatrix} \underline{b}(t) \\ . \\ \underline{b}(t-L+1) \end{bmatrix}$$

Sachant que :

$$\underline{x}(t\text{-}l) \quad = \sum_{m=1}^{M} \sum_{k=1+l}^{L_m+l} \underline{h}_m(k\text{-}l)\, s_m(t\text{-}k) + \underline{b}(t)$$

On en déduit, aux effets de bord près, que :

$$\underline{h}_m{}^L(k) = \begin{bmatrix} \underline{h}_m(k) \\ . \\ \underline{h}_m(k-L+1) \end{bmatrix} = \sum_{p=1}^{P_m} \rho_{mp} \begin{bmatrix} \underline{a}(\theta_{mp})h_{mp}(k) \\ . \\ \underline{a}(\theta_{mp})h_{mp}(k-L+1) \end{bmatrix} \tag{47}$$

Séparation de sources et goniométrie sur l'observation spatio-temporelle $\underline{y}(t)$ :

Le procédé met par exemple en oeuvre directement, 41, la méthode de séparation de sources de Souloumiac-Cardoso décrite dans la référence [1] précitée sur le vecteur d'observation $\underline{y}(t)$. Sachant que les signaux $s_m(t\text{-}k)$ sont corrélés, d'après les équations (46) (30) et la référence [2], le procédé identifie par émetteur plusieurs signatures spatio-temporelles $\underline{u}_{mk}$ vérifiant :

$$\underline{u}_{mk} = \sum_{i=1}^{L_m+L} \beta_{mki}\, \underline{h}_m{}^L(i) = \sum_{p=1}^{P_m} \rho_{mp} \sum_{i=1}^{L_m+L} \beta_{mki} \begin{bmatrix} \underline{a}(\theta_{mp})h_{mp}(i) \\ . \\ \underline{a}(\theta_{mp})h_{mp}(i-L+1) \end{bmatrix} \quad 1 \le k \le K \tag{48}$$

Ainsi pour un émetteur ayant une réponse impulsionnelle de longueur $L_m$ on identifie pour cet émetteur en sortie de séparation de sources [1] **K** vecteurs qui sont combinaison linéaire des vecteurs $[\underline{a}(\theta_{mp})^T h_{mp}(i) \dots \underline{a}(\theta_{mp})^T h_{mp}$

(i-L+1)]T dépendant des incidences $\theta_{mp}$ des multi-trajets de cet émetteur.

Goniométrie du m$^{ième}$ émetteur sur le vecteur $\underline{u}_{mk}$,42,

Le procédé réalise ensuite,42, une goniométrie d'un émetteur sur l'un des vecteurs $\underline{u}_{m1}$ ... $\underline{u}_{mK}$ identifiées en sortie de séparation de sources. Dans ces conditions le vecteur $\underline{u}_{mk}$ est transformé en la matrice suivante (49) :

$$\underline{U}_{mk} = \begin{bmatrix} u_1 \\ \cdot \\ u_N \\ \cdot \\ u_{1+N(L-1)} \\ \cdot \\ u_{N+N(L-1)} \end{bmatrix} \implies U_{mk} = \begin{bmatrix} u_1 & & u_{1+N(L-1)} \\ \cdot & \cdot & \cdot \\ u_N & \cdot & u_{N+N(L-1)} \end{bmatrix}$$

D'après la relation (48) $U_{mk}$ vaut :

$$U_{mk} = \sum_{p=1}^{P_m} \rho_{mp} \; \underline{a}(\theta_{mp}) \sum_{i=1}^{L_m+L} \beta_{mu} \underline{t}_{mp}{}^L(i)^T \text{ tel que } \underline{t}_{mp}{}^L(i) = \begin{bmatrix} h_{mp}(i) \\ \cdot \\ h_{mp}(i-L+1) \end{bmatrix} \quad (50)$$

Le calculateur peut alors estimer les incidences $\theta_{m1}$ ...$\theta_{mPm}$ des trajets du m$^{ième}$ émetteur en appliquant un algorithme de goniométrie sur la matrice de covariance $R_{mk}= U_{mk} \; U_{mk}{}^\dagger$, par exemple un algorithme à haute résolution tel que MUSIC décrit dans la référence [3] ayant pour auteurs R.O.Schmidt, pour titre « A signal subspace approach to multiple emitters location and spatial estimation », PhD Thesis, Stanford University, CA, Novembre 1991.

Identification et élimination des sorties $\underline{u}_{mk}$ (1<k<K) associées au même émetteur, 43,

Ayant réalisé la goniométrie sur le vecteur $\underline{u}_{mk}$, le calculateur va éliminer les vecteurs associés au même émetteur c'est à dire les $\underline{u}_{mj}$ pour j≠k. Les matrices $U_{m'j}$ associées aux $\underline{u}_{m'j}$ vérifient toutes la relation suivante d'après (50):

$$U_{m'j} = A_{m'} \; B_{m'j}{}^T \quad \text{avec} \quad A_{m'} = [ \; \underline{a}(\theta_{m'1}) \; \dots \; \underline{a}(\theta_{m'Pm'}) ] \qquad (51)$$

Où

$$B_{m'j} = [ \; \underline{b}_{1j} \; \dots \; \underline{b}_{Pm'j}] \quad \underline{b}_{pj} = \rho_{m'p} \sum_{i=1}^{L_m+L} \beta_{m'ji} \; \underline{t}_{m'p}{}^L(i)$$

Sachant que le projecteur $\Pi_m = I - A_m \, (A_m{}^H A_m)^{-1} A_m{}^H$ vérifient $\Pi_m A_m = 0$ on en déduit que (52) :

$$Cri(j) = trace\{ \; \Pi_m \; U_{m'j} \, ( \; U_{m'j}{}^H \; U_{m'j} \, )^{-1} U_{m'j}{}^H \; \Pi_m \; \} = trace\{ \; \Pi_m \; P_{m'j} \; \Pi_m \; \} = 0$$

lorsque m=m'
Où trace{Mat} désigne la trace de la matrice Mat. Pour une matrice $U_{m'j}$ quelconque le critère Cri(j) est normalisé entre 0 et 1. Lorsque la matrice $U_{mj}$ est associé à un vecteur $\underline{u}_{mj}$ associé au même émetteur que $\underline{u}_{mk}$ ce critère Cri(j) s'annule. Sachant que $\Pi_m$ et $U_{mj}$ sont estimées avec une certaine précision, on comparera Cri(j) à un seuil $\alpha$ proche de zéros (typiquement 0.1) pour décider si les vecteurs $\underline{u}_{mk}$ et $\underline{u}_{m'j}$ appartiennent au même émetteur : Cri(j) $< \alpha$ implique que $\underline{u}_{mk}$ et $\underline{u}_{m'j}$ sont associés au même émetteur et que m'=m. Ainsi pour identifier qu'un vecteur $\underline{u}_{m'j}$ est associé au même émetteur que le vecteur $\underline{u}_{mk}$ le calculateur effectue les opérations suivantes :

1) Après la goniométrie sur $\underline{u}_{mk}$ le calculateur détermine les incidences $\theta_{ml}...\theta_{mP_m}$ des trajets et construit la matrice $A_m$ de l'expression (51). On en déduit $\Pi_m = I - A_m (A_m^H A_m)^{-1} A_m^H$.

2) il transforme selon la relation (49) le vecteur $\underline{u}_{m'j}$ en matrice $U_{m'j}$. On en déduit $P_{m'j} = U_{m'j} (U_{m'j}^H U_{m'j})^{-1} U_{m'j}^H$.

3) il calcul le critère Cri(j)= trace$\{ \Pi_m P_{m'j} \Pi_m \}$ de l'équation (52)

4) il applique par exemple le test d'association suivant :

- Cri(j) $< \alpha \Rightarrow \underline{u}_{mk}$ et $\underline{u}_{m'j}$ sont associés au même émetteur m'=m et élimination du vecteur $\underline{u}_{mj}$.
- Cri(j) $> \alpha \Rightarrow$ m'≠m.

Cette opération est effectuée sur tous les vecteurs différents de $\underline{u}_{mk}$, puis le calculateur passe à l'émetteur suivant en réalisant l'étape de goniométrie sur l'un des vecteurs $\underline{u}_{m'j}$ non éliminé. Après la goniométrie le procédé réitère l'élimination et toutes ces opérations continuent jusqu'à ce qu'il n'y ait plus de vecteurs $\underline{u}_{m'j}$.

## Estimation des temps de retard des trajets du m$^{\text{ième}}$ émetteur

Selon une variante de mise en oeuvre du procédé, les incidences $\theta_{mi}$ des $P_m$ trajets sont connues pour $1 < i < P_m$ et les vecteurs directeurs $\underline{a}(\theta_{mi})$ associés peuvent être déduits. Ces informations sont utilisées pour déduire les retards de propagation entre les trajets. Pour obtenir les valeurs des retards des trajets, le calculateur utilise les sorties de la séparation de sources spatio-temporelle. D'après l'expression (2) on peut écrire l'expression (46) de $\underline{y}(t)$ de la façon suivante :

$$\underline{y}(t) = \begin{bmatrix} \underline{x}(t) \\ \cdot \\ \underline{x}(t-L+1) \end{bmatrix} = \sum_{m=1}^{M} \sum_{i=1}^{P_m} \rho_{mi} \begin{bmatrix} \underline{a}(\theta_{mi})s_m(t-\tau_{mi}) \\ \cdot \\ \underline{a}(\theta_{mi})s_m(t-L+1-\tau_{mi}) \end{bmatrix} + \underline{b}^L(t) \qquad (53)$$

On en déduit donc que les vecteurs $\underline{u}_{mk}$ selon l'expression (48) et les signaux $\hat{s}'_{mk}(t)$ obtenus en sortie de séparation de sources et associés au m$^{\text{ième}}$ émetteur vérifient la relation suivante :

$$\sum_{i=1}^{P_m} \rho_{mi} \begin{bmatrix} \underline{a}(\theta_{mi})s_m(t-\tau_{mi}) \\ \vdots \\ \underline{a}(\theta_{mi})s_m(t-L+1-\tau_{mi}) \end{bmatrix} = \sum_{k=1}^{K} \underline{u}_{mk}\hat{s}'_{mk}(t) \qquad (54)$$

où $\rho_{mi}$ désigne le facteur d'atténuation du i$^{\text{ème}}$ trajet. Sachant que $\underline{u}_{mk}^0$ correspond aux N premières composantes de $\underline{u}_{mk}$ on en déduit que :

$$\sum_{i=1}^{P_m} \rho_{mi} \underline{a}(\theta_{mi}) s_m(t-\tau_{mi}) = \sum_{k=1}^{K} \underline{u}_{mk}^0 \cdot \hat{s}'_{mk}(t) \qquad (55)$$

L'expression (55) peut s'écrire matriciellement de la façon suivante :

$$A_m \underline{s}_m(t) = U_m^0 \underline{\hat{s}}'_m(t) \qquad (56)$$

En posant : $A_m=[\underline{a}(\theta_{m1})....\underline{a}(\theta_{mPm})]$ et $U_m^0=[\underline{u}_{m1}^0 ... \underline{u}_{mK}^0]$ et

$$\underline{s}_m(t)=\begin{bmatrix} \rho_{m1}s_m(t-\tau_{m1}) \\ . \\ \rho_{mPm}s_m(t-\tau_{mPm}) \end{bmatrix} \text{ puis } \underline{\hat{s}}'_m(t)=\begin{bmatrix} \hat{s}_{m1}(t) \\ . \\ \hat{s}_{mK}(t) \end{bmatrix}$$

Connaissant la matrice $A_m$ des vecteurs directeurs des multi-trajets ainsi que la matrice $U_m^0$ des vecteurs identifiés, on en déduit le vecteur $\underline{s}_m(t)$ en fonction du vecteur $\underline{\hat{s}}'_m(t)$ issus de la séparation de sources spatio-temporelle tel que :

$$\underline{s}_m(t) = A_m^{-1} U_m^0 \underline{\hat{s}}'_m(t) \tag{57}$$

Sachant que la $i^{ème}$ composante de $\underline{s}_m(t)$ vérifie $s_m(t)(i)=\rho_{mi}s_m(t-\tau_{mi})$ on maximise le critère suivant pour estimer le retard $\delta\tau_{mi}=\tau_{mi} - \tau_{m1}$ du $i^{ème}$ trajet par rapport au $1^{ier}$ trajet.

$$\text{Cri}_i(\delta\tau)=E[s_m(t)(i)s_m(t-\delta\tau)(1)^*] \text{ tel que } \max_{\delta\tau}(Cri(\delta\tau)) = \delta\tau_{mi} \tag{58}$$

Le procédé exécute alors l'algorithme d'estimation des $\delta\tau_{mi}$ pour $1<i<P_m$ consistant par exemple à effectuer les étapes suivantes :

- Etape n°1 : Construction de $A_m=[\underline{a}(\theta_{m1})....\underline{a}(\theta_{mPm})]$ à partir des incidences $\theta_{mi}$.
- Etape n°2 : Calcul du signal $\underline{s}_m(t)$ à partir de l'expression (57).
- Etape n°3 : Pour chaque trajet effectuer les opérations suivantes.
- Calcul du critère $\text{Cri}_i(\delta\tau)$ de l'expression (58).
- Maximisation du critère $\text{Cri}_i(\delta\tau)$ pour obtenir $\delta\tau_{mi}=\tau_{mi} - \tau_{m1}$.

A la différence de la première méthode exposée ci-dessus, on utilise ici les K sorties $\underline{u}_{mk}$ et $\hat{s}'_{mk}(t)$ ($1\leq k\leq K$) de la séparation de sources spatio-temporelle. De plus on utilise que les N $1^{ière}$ composantes de $\underline{u}_{mk}$, soit le vecteur $\underline{u}_{mk}^0$ (N nombre d'antennes).

## Exemple de Simulation

Dans cet exemple on simule le cas de M=2 émetteurs où l'un des émetteurs est composé de deux trajets. Les deux émetteurs ont les caractéristiques suivantes en incidences , retards et trajets :

- **$1^{ier}$ émetteur (m=1) :** composé de $P_1=2$ trajets
  tel que $\theta_{11}=60°$ $\theta_{12}=75°$ et le retard $\tau_{12}=0$ $\tau_{12}=2$ échantillons QPSK NRZ à 10 échantillons par symboles.
- **$2^{ieme}$ émetteur (m=2) :** composé de $P_1=2$ trajets
  tel que $\theta_{21}=150$ et le retard $\tau_{21}=0$

La figure 8 représente les pseudo-spectres de MUSIC sur les matrices $R_{1i}$(courbe I) et $R_{2i}$ (courbe II) associées respectivement au premier et au second émetteur. Les maximas de ces pseudo-spectres permettent de déterminer les incidence $\theta_{mp}$ des multi-trajets de ces émetteurs.

## Revendications

1. Procédé d'estimation spatio-temporel d'un ou de plusieurs émetteurs à partir d'un réseau antennaire (2) constitué de plusieurs antennes ($3_1$ à $3_N$ )**caractérisé en ce qu'**il comporte au moins les étapes suivantes :

➢ une étape de séparation (20) des émetteurs afin d'obtenir les différents signaux de sorties $\hat{s}'_{mp}$ (t) reçus par le réseau d'antennes,

➢ une étape de regroupement (21) des sorties appartenant à un même émetteur, par intercorrélation, et

➢ une étape de détermination (22) des différents angles $\theta_{mPm}$ des multitrajets par émetteur.

**2.** Procédé selon la revendication 1 **caractérisé en ce que** l'étape de regroupement des différents signaux par émetteur comporte :

➢ une étape d'intercorrélation deux par deux des composantes $u_k(t)$ du vecteur signal s'(t) issu de l'étape de séparation des sources,

➢ une étape de recherche de la ou des valeurs des retards permettant d'obtenir une valeur maximale pour la fonction d'intercorrélation, $r_{kk'}(\tau) = E[u_k(t)u_{k'}(t-\tau)^*]$,

➢ une étape de mémorisation des différents indices des trajets pour lesquels la fonction de corrélation est maximale.

**3.** Procédé selon l'une des revendications 1 à 2 **caractérisé en ce qu'**il comporte une étape de détermination des temps de retard à partir des incidences $\theta_{mi}$, du signal $\underline{s}_m(t)$ et et de la recherche du maximum du critère Cri $_i(\delta\tau)$ pour obtenir $\delta\tau_{mi}=\tau_{mi} - \tau_{m1}$, avec $Cri_i(\delta\tau)=E[s_m(t)(i)s_m(t- \delta\tau)(1)^*]$.

**4.** Procédé d'estimation spatio-temporel d'un ou de plusieurs émetteurs à partir d'un réseau antennaire **caractérisé en ce qu'**il comporte au moins les étapes suivantes :

➢ une étape de séparation spatio-temporelle (41) des différents émetteurs, avant de déterminer les angles d'arrivée $\theta_{mi}$, (42),

➢ une étape d'identification et d'élimination (43) des sorties associées au même émetteur après avoir déterminé les angles $\theta_{mi}$.

**5.** Procédé selon la revendication 4 **caractérisé en ce que** l'étape de séparation spatio-temporelle comporte une étape où, pour un émetteur donné, le signal $s_m(t)$ est retardé, assimilant ainsi le signal retardé à la sortie d'un filtre de longueur $L_m$ dont les entrées sont $s_m(t)$ jusqu'à $s_m(t-\tau_m)$, avant d'appliquer l'étape de séparation de sources.

**6.** Procédé selon l'une des revendications 1 à 2 et 4 à 5 **caractérisé en ce qu'**il utilise une méthode de goniométrie haute résolution de type MUSIC, par interférométrie.

**7.** Application du procédé selon l'une des revendications 1 à 6 à la goniométrie de sources multitrajets.

**8.** Dispositif d'estimation spatio-temporel d'un ensemble d'émetteurs qui émettent des ondes se propageant sous la forme de multitrajets dans un réseau de N capteurs **caractérisé en ce qu'**il comporte un calculateur (4) 6 adapté à mettre en oeuvre les étapes du procédé selon l'une des revendications 1 à 6.

**Claims**

**1.** Method of spatio-temporal estimation of one or more transmitters on the basis of an antenna array (2) consisting of several antennas ($3_1$ to $3_N$) **characterized in that** it comprises at least the following steps:

➢ a step (20) of separating the transmitters so as to obtain the various output signals $\hat{s}'_{mp}(t)$ received by the array of antennas,

➢ a step (21) of grouping together the outputs belonging to one and the same transmitter, by intercorrelation, and

➢ a step (22) of determining the various angles $\theta_{mPm}$ of the multipaths per transmitter.

**2.** Method according to Claim 1, **characterized in that** the step of grouping together the various signals per transmitter comprises:

➢ a step of pairwise intercorrelation of the components $u_k(t)$ of the signal vector s'(t) emanating from the step of separating the sources,

➢ a step of searching for the value or values of the delays making it possible to obtain a maximum value for the intercorrelation function, $r_{kk'}(\tau)=E[u_k(t)u_{k'}(t-\tau)^*]$,

➢ a step of storing the various indices for the paths for which the correlation function is a maximum.

3. Method according to one of Claims 1 to 2, **characterized in that** it comprises a step of determining time delays on the basis of the angles of incidence θmi, of the signal $\underline{s}_m(t)$ and of the search for the maximum of the criterion $Cri_i$ $(\delta\tau)$ so as to obtain $\delta\tau_{mi}=\tau_{mi} - \tau_{m1}$, with $Cri_i(\delta\tau)=E[s_m(t)(i)s_m(t- \delta\tau)(1)^*]$.

4. Method of spatio-temporal estimation of one or more transmitters on the basis of an antenna array **characterized in that** it comprises at least the following steps:

   ➢ a step of spatio-temporal separation (41) of the various transmitters, before determining the angles of arrival $\theta_{mi}$, (42),
   ➢ a step of identifying and eliminating (43) the outputs associated with the same transmitter after having determined the angles $\theta_{mi}$.

5. Method according to Claim 4, **characterized in that** the step of spatio-temporal separation comprises a step where, for a given transmitter, the signal $s_m(t)$ is delayed, thus likening the delayed signal to the output of a filter of length $L_m$ whose inputs are $s_m(t)$ up to $s_m(t-\tau_m)$, before applying the step of separating the sources.

6. Method according to one of Claims 1 to 2 and 4 to 5, **characterized in that** it uses a high-resolution goniometry procedure of MUSIC type, based on interferometry.

7. Application of the method according to one of Claims 1 to 6 to the goniometry of multipath sources.

8. Device for the spatio-temporal estimation of a set of transmitters which transmit waves propagating in the form of multipaths in an array of N sensors, **characterized in that** it comprises a computer (4) suitable for implementing the steps of the method according to one of Claims 1 to 6.

**Patentansprüche**

1. Verfahren zur raum-zeitlichen Schätzung eines oder mehrerer Sender ausgehend von einem aus mehreren Antennen ($3_1$ bis $3_N$) bestehenden Antennennetz (2), **dadurch gekennzeichnet, dass** es mindestens die folgenden Schritte aufweist:

   ➢ einen Schritt der Trennung (20) der Sender, um die verschiedenen Signale von Ausgängen $\hat{s}'_{mp}(t)$ zu erhalten, die von dem Antennennetz empfangen werden,
   ➢ einen Schritt der Gruppierung (21) der zum gleichen Sender gehörenden Ausgänge durch Interkorrelation, und
   ➢ einen Schritt der Bestimmung (22) der verschiedenen Winkel $\theta_{mPm}$ der Mehrwege pro Sender.

2. Verfahren nach Anspruch 1, **dadurch gekennzeichnet, dass** der Schritt der Gruppierung der verschiedenen Signale pro Sender aufweist:

   ➢ einen Schritt der paarweisen Interkorrelation der Komponenten $u_k(t)$ des Signalvektors s'(t), der vom Schritt der Trennung der Quellen stammt,
   ➢ einen Schritt der Suche des Werts oder der Werte der Verzögerungen, die es ermöglichen, einen maximalen Wert für die Interkorrelationsfunktion $r_{kk}\cdot(\tau)=E[u_k(t)u_k\cdot(t-\tau)^*]$ zu erhalten,
   ➢ einen Schritt der Speicherung der verschiedenen Indizes der Wege, für die die Korrelationsfunktion maximal ist.

3. Verfahren nach einem der Ansprüche 1 bis 2, **dadurch gekennzeichnet, dass** es einen Schritt der Bestimmung der Verzögerungszeiten ausgehend von den Einfallwinkeln θmi, vom Signal $\underline{s}_m(t)$ und von der Suche des Maximums des Kriteriums $Cri_i(\delta\tau)$ enthält, um zu erhalten:

$$\delta\tau_{mi}=\tau_{mi}-\tau_{m1}, \quad \mathtt{mit} \ \ Cri_i(\delta\tau)=E[s_m(t)(i)s_m(t-\delta\tau)(1)^*].$$

4. Verfahren zur raum-zeitliche Schätzung eines oder mehrerer Sender ausgehend von einem Antennennetz, **dadurch**

**gekennzeichnet, dass** es mindestens die folgenden Schritte aufweist:

➢ einen Schritt der raum-zeitlichen Trennung (41) der verschiedenen Sender, ehe die Auftreffwinkel $\theta_{mi}$ bestimmt werden (42),
➢ einen Schritt der Identifikation und des Entfernens (43) der dem gleichen Sender zugeordneten Ausgänge nach der Bestimmung der Winkel $\theta_{mi}$.

5. Verfahren nach Anspruch 4, **dadurch gekennzeichnet, dass** der Schritt der raum-zeitlichen Trennung einen Schritt aufweist, während dem für einen gegebenen Sender das Signal $s_m(t)$ verzögert wird, wodurch das verzögerte Signal dem Ausgang eines Filters der Länge $L_m$ gleichgesetzt wird, dessen Eingänge $s_m(t)$ bis $s_m(t-\tau_m)$ sind, ehe der Schritt des Trennens der Quellen angewendet wird.

6. Verfahren nach einem der Ansprüche 1 bis 2 und 4 bis 5, **dadurch gekennzeichnet, dass** es eine Methode hochauflösender Goniometrie des Typs MUSIC durch Interferometrie verwendet.

7. Anwendung des Verfahrens nach einem der Ansprüche 1 bis 6 auf die Goniometrie von Mehrweg-Quellen.

8. Vorrichtung zur raum-zeitlichen Schätzung einer Gruppe von Sendern, die Wellen aussenden, die sich in Form von Mehrwegen in einem Netz von N Sensoren fortpflanzen, **dadurch gekennzeichnet, dass** sie einen Rechner (4) aufweist, der die Schritte des Verfahrens nach einem der Ansprüche 1 bis 6 durchführen kann.

**FIG.1**

**FIG.2**

FIG.3

FIG.4

$\underline{x}(t)$ ⟶ SÉPARATION DE SOURCES [20] ⟶ $\underline{s}'(t)$ ⟶ REGROUPEMENT DES SORTIES PAR ÉMETTEUR [21] ⟶ $\underline{s}'_1(t)$ ⟶ GONIO DU 1ier ÉMETTEUR ⟶ $\theta_{11} \ldots \theta_{1P^1}$

$\underline{s}'_M(t)$ ⟶ GONIO DU Mième ÉMETTEUR [22] ⟶ $\theta_{M1} \ldots \theta_{MP^M}$

## FIG.5

$k=1$ ET $P_k=0$ [30]

$k'=k+1$ $T_k(1)=k$ [31]

RECHERCHE DU $\tau_{max}$ QUI MAXIMISE: $r_{kk'}(\tau)$ [32]

TEST DE CORRÉLATION: $V_{kk'}(\tau_{max})$ [34]

$>\alpha(pfa)$

$P_k = P_k + 1$
$T_k(P_k+1)=k'$ [33]

$k=k+1$

$k'=k'+1$

$<\alpha(pfa)$

ÉLIMINATION DES TABLEAUX $T_k(p)$ IDENTIQUES [35]

$P_m$ ASSOCIÉ À $T_m(p)$ POUR $1 \leq m \leq M$ [36]

## FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.F. CARDOSO ; A. SOULOUMIAC.** Blind Beamforming for Non Gaussian Signals. IEE Proc-F, Décembre 1993, vol. 140, 362-370
- **P. CHEVALIER ; G. BENOIT ; A. FERREOL.** Direction finding after blind identification of sources steering vectors: The Blind-Maxcor and Blind-MUSIC methods. *Triestre,* Septembre 1996
- Joint angle and delay estimation (JADE) for signals in multipath environments. *IEEE comput.soc,* 03 Novembre 1996, 1250-1254
- Detection of the number of cyclostationary signals in unknows interference and noise. **SV.Schell ; W.Gardner.** Proc of Asilonan conf on signal, systems and computers. 05 Novembre 1990